# FASCICULE DE BREVET EUROPEEN

(11) **EP 1 226 181 B1**
(45) Date de publication et mention de la délivrance du brevet: **12.12.2007**
(21) Numéro de dépôt: 00960760.7
(22) Date de dépôt: 30.08.2000
(51) Int. Cl.: C08F 2/06

(54) **PROCEDE DE PREPARATION DES DISPERSIONS STABLES DE (CO)POLYMERES DANS UN POLYOL**
VERFAHREN ZUR HERSTELLUNG VON STABILEN DISPERSIONEN VON (CO)POLYMEREN IN EINEM POLYOL
METHOD FOR PREPARING STABLE (CO)POLYMER DISPERSIONS IN A POLYOL

(30) Priorité: 22.09.1999 FR 9911834
(43) Date de publication de la demande: 31.07.2002
(73) Titulaire: ARKEMA FRANCE, 92700 Colombes (FR)
(72) Inventeur: CERF, Martine, F-92300 Levallos-Perret (FR); WNUK, Mieczyslaw, F-27410 Sainte Marguerite en Ouche (FR)
(74) Mandataire: Dang, Doris
(86) Numéro de dépôt international: PCT/FR2000/002401
(87) Numéro de publication internationale: WO 2001/021665

(56) Documents cités:
- EP-A- 0 001 789
- FR-A- 2 384 801

## Description

La présente invention concerne un procédé de préparation de dispersions stables, de faible viscosité et, exemptes de résidu d'amorceur toxique, de (co)polymères dans un polyol. Plus particulièrement, elle se rapporte à la polymérisation in situ de monomère ou d'un mélange de monomères éthylénique(s) insaturé(s) dans un polyol, en présence d'un amorceur azoïque particulier.

Les dispersions de copolymères greffés préparées par la polymérisation in situ d'un monomère ou d'un mélange de monomères éthylénique(s) insaturé(s) dans un polyol en présence d'un amorceur de radicaux libres sont connus, comme il ressort des brevets US 3 652 659, US 3 875 258 et US 3 950 317. Parmi les diverses méthodes de préparation de dispersions de copolymères greffés divulguées dans ces brevets, celle qui est particulièrement préférée consiste à injecter à vitesse constante dans un réacteur contenant du polyol, simultanément du monomère et de l'amorceur dispersé dans une fraction du polyol. Selon les brevets précités, si de nombreux amorceurs peuvent convenir, il est toutefois préférable d'utiliser l'azobis(isobutyronitrile) AIBN.

Bien que l'AIBN soit l'amorceur préféré pour la polymérisation, il présente toutefois l'inconvénient d'être solide à température ambiante et d'être très peu soluble dans le polyol, donc nécessitant une agitation permanente de la dispersion d'amorceur de manière à ce que la quantité d'AIBN injectée dans le réacteur soit constante dans le temps. En outre, la décomposition de l'AIBN lors de la réaction entraîne la formation de sous produits, tels que le tétraméthylsuccinonitrile, hautement toxiques dont l'élimination de la dispersion de copolymères serait extrêmement difficile, voire impossible.

Par ailleurs, le brevet US 4 161 468 décrit un procédé de préparation de dispersions de copolymères greffés par polymérisation in situ d'un monomère ou d'un mélange de monomères éthylénique(s) insaturé(s) dans un polyol, en présence d'un composé azoïque liquide asymétriquement substitué et, dont la durée de demi-vie à une température comprise entre 55 et 100°C est de 10 heures. Le composé azoïque liquide défini dans ce document est représenté par la formule (I) : 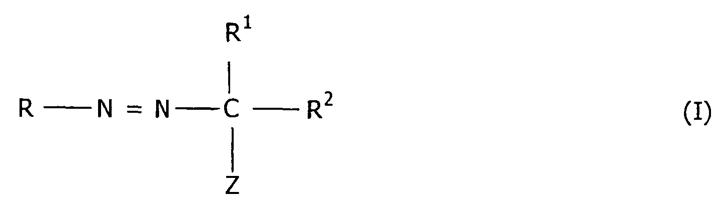 dans laquelle R est un radical alkyle ayant un nombre de carbone compris entre 1 et 6, R¹ est choisi du groupe formé d'un radical alkyle ayant un nombre de carbone compris entre 1 et 20, d'un radical phénylalkyle ayant de 7 à 12 atomes de carbone, d'un radical cycloalkyle ayant de 3 à 12 atomes de carbone ; R² est un radical alkyle ayant un nombre de carbone compris entre 1 et 6 ou un radical phényle ; et Z est soit un atome d'hydrogène soit un groupement C ≡ N.

La demanderesse a maintenant mis au point un procédé de préparation de dispersions stables de (co)polymères dans un polyol par polymérisation in situ d'un monomère ou d'un mélange de monomères éthylénique(s) insaturé(s), en présence d'une nouvelle famille d'amorceur azoïque.

Cette nouvelle famille, est représentée par les esters d'acides azocarboxyliques de formule (II), 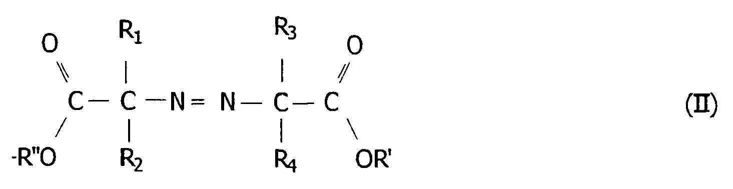 dans laquelle :
R₁, R₂, R₃ et R₄, identiques ou différents sont sélectionnés indépendamment dans le groupe consistant en -alkyles linéaires ou ramifiés ayant de 1 à 9 atomes de carbone, de préférence de 1 à 4 atomes de carbone, éventuellement substitués par un ou plusieurs substituants sélectionnés parmi les substituants hydroxyl, alkoxy en C₁ à C₆, halogène ; - cycloalkyles en C₃ à C₁₂, éventuellement substitués par un ou plusieurs substituants sélectionnés parmi les groupes alkyle en C₁ à C₆, alkoxy en C₁ à C₆, hydroxy et halogéné ;
   - aralkyles éventuellement substitués par un ou plusieurs groupes alkyle en C₁ à C₆, alkoxy en C₁ à C₆, hydroxy et halogéné ;
   - aryles éventuellement substitués par un ou plusieurs substituants sélectionnés parmi les groupes alkyle en C₁ à C₆, alkoxy en C₁ à C₆, hydroxy et halogéné ;
avec au moins une des combinaisons R₁-R₂ et R₃-R₄ pouvant éventuellement former un cycle aliphatique ; R" et R' sont identiques ou différents l'un de l'autre et sont sélectionnés indépendamment dans le groupe consistant en radicaux aliphatiques linéaires ou ramifiés en C₁ à C₁₀, de préférence en C₁ à C₄.

L'avantage de ces esters d'acides azocarboxyliques est leur basse température de fusion, généralement inférieure à 27°C. Les esters d'acides azocarboxyliques préférés sont ceux dans lesquels R" et R' représentent le méthyle ou l'éthyle et dans lesquels R₁, R₂, R₃ et R₄ représentent avantageusement des groupes alkyles de C₁ à C₄.

L'ester d'acide azocarboxylique particulièrement préféré est le diéthyl 2, 2'-azobisisobutyrate, c'est-à-dire avec R₁, R₂, R₃, R₄ représentant le méthyle et R' et R" représentant l'éthyle. Un mélange de diéthyl 2, 2'-azobisisobutyrate (DEAB) et de diméthyl 2,2'-azobisisobutyrate (DMAB) avec un taux massique en DEAB, de préférence supérieur à 50 % a donné des résultats très intéressants. Des mélanges de DEAB, DMAB et de méthyl2, éthyl 2'-azobisisobutyrate avec de préférence un rapport molaire COOMe/COOEt ≤ 10 peuvent convenir.

Les esters d'acides azocarboxyliques de formule (II) peuvent être préparés par un procédé classique en deux étapes comprenant une première étape de conversion de l'azonitrile, par réaction avec un alcool, en présence de HCl, selon la réaction de Pinner, conduisant au chlorhydrate d'azoiminoéther correspondant et une seconde étape d'hydrolyse en présence du chlorhydrate ainsi obtenu. Ils peuvent être également préparés par les procédés améliorés tels que décrits dans les documents DE 2 254 572, EP 80 275 et EP 230 586.

En outre, ces esters peuvent être préparés par réaction d'un azonitrile avec un alcool et de l'acide chlorhydrique dans un solvant aromatique, avec un rapport molaire HCl/azonitrile > 2 lorsque l'alcool est le méthanol et > 3 lorsque l'alcool est l'éthanol ou un alcool supérieur.

La quantité d'esters d'acides azocarboxyliques mise en jeu dans le procédé suivant la présente invention représente environ 0,1 à 6 % en poids du ou des monomère(s) éthylénique(s) insaturé(s) utilisé(s) et de préférence 0,5 à 4 % en poids.

Les monomère éthyléniques insaturés pouvant être utilisés dans le procédé de l'invention sont, par exemple, le butadiène, l'isoprène, le 1,4-pentadiène, le 1,6-hexadiène, le 1,7-octadiène, le styrène, l'α-méthylstyrène, le 2,4-diméthylstyrène, l'éthylstyrène, l'isopropylstyrène, le butylstyrène, le phénylstyrène, le méthylstyrène, le cyclohexylstyrène, le benzylstyrène, etc. ; d'autres styrènes substitués comme le chlorostyrène, le 2,5-dichlorostyrène, le bromostyrène, le fluorostyrène, le trifluorométhylstyrène, l'iodostyrène, le cyanostyrène, le nitrostyrène, le N,N-diméthylaminostyrène, l'acétoxystyrène, le 4-vinylbenzoate de méthyle, le phénoxystyrène, le sulfure de p-vinylphényle et de phényle, l'oxyde de p-vinylphényle et de phényle, etc. ; les monomères acryliques et acryliques substitués, comme l'acrylonitrile, l'acide acrylique, l'acide méthacrylique, l'acrylate de méthyle, l'acrylate de 2-hydroxyéthyle, le méthacrylate de 2-hydroxyéthyle, le méthacrylate de méthyle, le méthacrylate de cyclohéxyle, le méthacrylate de benzoyle, le méthacrylate d'isopropyle, le méthacrylate d'octyle, le méthacrylonitrile, l'α-chloroacrylate de méthyle, l'α-éthoxyacrylate d'éthyle, l'α-acétaminocrylate de méthyle, l'acrylate de butyle, l'acrylate d'éthyle, l'acrylate de 2-éthylhéxyle, l'acrylate de phényle, le méthacrylate de phényle, l'α-chloroacrylonitrile, le N,N-diméthylacrylamide, le N,N-dibenzylacrylamide, le N-butylacrylamide, le méthacrylylformamide, etc. ; les esters vinyliques, les éthers vinyliques, les vinylcétones, etc., comme l'acétate de vinyle, le chloroacétate de vinyle, l'alcool vinylique, le butyrate de vinyle, l'acétate d'isopropényle, le formiate de vinyle, le chlorure de vinylidène, le méthoxyacétate de vinyle, le benzoate de vinyle, le chlorure de vinyle, l'iodure de vinyle, le vinyltoluène, le vinylnaphtalène, le bromure de vinyle, le fluorure de vinyle, le bromure de vinylidène, le 1-chloro-1-fluoroéthylène, le fluorure de vinylidène, l'éther méthylique de vinyle, l'éther éthylique de vinyle, les éthers propyliques de vinyle, les éthers butyliques de vinyle, l'éther 2-éthylhexylique de vinyle, l'éther phénylique de vinyle, l'éther 2-méthoxyéthylique de vinyle, le méthoxybutadiène, l'éther 2-butoxyéthylique de vinyle, le 3,4-dihydro-1,2-pyranne, l'éther 2-butoxy-2'-vinyloxyéthylique d'éthyle, l'éther 2-éthylmercaptoéthylique de vinyle, la vinylméthylcétone, la vinyléthylcétone, les vinylphosphonates tels que le vinylphosphonate de bis(β-chloroéthyle), la vinylphénylcétone, le sulfure de vinyle et d'éthyle, la sulfone de vinyle et d'éthyle, le N-méthyl-N-vinylacétamide, la N-vinylpyrrolidone, le vinylimidazole, le sulfure de divinyle, le sulfoxyde de divinyle, la sulfone de divinyle, le vinylsulfonate de sodium, le vinylsulfonate de méthyle, le N-vinylpyrrole, etc. ; le fumarate de diméthyle, le maléate de diméthyle, l'acide maléique, l'acide crotonique, l'acide fumarique, l'acide itaconique, l'itaconate de monométhyle, le méthacrylate de t-butylaminoéthyle, le méthacrylate de diméthylaminoéthyle, l'acrylate de glycidyle, l'alcool allylique, les monoesters de glycols et de l'acide itaconique, le dichlorobutadiène, la vinylpyridine, etc. La quantité de monomère(s) éthylénique(s) insaturé(s) pour la polymérisation est généralement de 5 à 80 % et de préférence de 10 à 50 % du poids du polyol.

Les monomères éthyléniques insaturés préférés sont les monomères ou mélange de monomères miscibles dans le polyol. On peut citer notamment le styrène, les acryliques substitués ou non.

Suivant l'invention, la température de polymérisation peut être comprise entre 60 et 140°C et de préférence comprise entre 70 et 120°C.

Les polyols pouvant être utilisés dans la présente invention sont connus. Ils peuvent aussi bien être exempts d'insaturation éthylénique comme ceux décrits dans le brevet US réexaminé N° 28.715 qu'insaturés comme ceux décrits dans le brevet US 3 652 659 et le brevet US réexaminé N° 29.014.

Les polyols exempts d'insaturation éthylénique sont souvent obtenus par condensation catalytique d'un oxyde d'alkylène ou d'un mélange d'oxydes d'alkylène simultanément ou successivement avec un composé organique comprenant au moins 2 atomes d'hydrogène actifs comme mentionné dans les brevets US 1 922 451, US 3 190 927 et US 3 346 557.

Des polyols représentatifs sont notamment les polyesters polyhydroxylés, les polyalkylènepolyétherpolyols, les polyuréthannes à plusieurs radicaux hydroxyle terminaux, les polycaprolactonepolyesters à plusieurs radicaux hydroxyle terminaux, les composés phosphorés polyhydroxylés et les produits d'addition d'oxydes d'alkylène sur les polythioéthers polyhydroxylés, les polyacétals, les polyols et thiols aliphatiques, l'ammoniac et les amines, notamment les amines aromatiques, aliphatiques ou hétérocycliques, éventuellement en mélange. Les produits d'addition d'oxydes d'alkylène sur des composés comptant au nombre de deux ou davantage des radicaux différents des classes ci-dessus conviennent aussi, ainsi qu'il en est des amino-alcools comprenant un radical amino et un radical hydroxyle. Il est possible d'utiliser également les produits d'addition d'oxydes d'alkylène sur des composés contenant un radical thiol et un radical hydroxyle, de même que sur des composés contenant un radical amino et un radical thiol. En règle générale, le poids équivalents des polyols est de 100 à 20 000, et de préférence de 500 à 10 000 et encore mieux de 1 000 à 3 000.

Tout polyester hydroxylé approprié convient, comme par exemple ceux issus d'acides polycarboxyliques et d'alcools polyhydroxylés. Il est possible d'utiliser tout acide polycarboxylique convenable, comme l'acide oxalique, l'acide malonique, l'acide succinique, l'acide glutarique, l'acide adipique, l'acide pimélique, l'acide subérique, l'acide azélaïque, l'acide sébacique, l'acide brassylique, l'acide thapsique, l'acide maléique, l'acide fumarique, l'acide glutaconique, l'acide α-hydromuconique, l'acide β-hydromuconique, l'acide α-butyl-α-éthylglutarique, l'acide α-β-diéthylsuccinique, l'acide isophtalique, l'acide téréphtalique, l'acide hémimellitique et l'acide 1,4-cyclohexanedicarboxylique. Il est possible d'utiliser tout alcool polyhydroxylé convenable tant de caractère aliphatique que de caractère aromatique, comme l'éthylèneglycol, le 1,3-propylèneglycol, 1,2-propylèneglycol, le 1,4-butylèneglycol, le 1,3-butylèneglycol, le 1,2-butylèneglycol, le 1,5-pentanediol, le 1,4-pentanediol, le 1,3-pentanediol, le 1,6-hexanediol, le 1,7 heptanediol, le glycérol, le 1,1,1-triméthylolpropane, le 1,1,1-triméthyloléthane, l'héxane-1,2,6-triol, l'α-méthylglucoside, le pentaérythritol et le sorbitol. Par "alcool polyhydroxylé", on entend également les composés dérivant du phénol, comme le 2,2-bis(4-hydroxyphényl)propane, appelé couramment Bisphénol A.

Il est possible d'utiliser tout polyalkylène-polyéther-polyol approprié comme le produit de la polymérisation d'un oxyde d'alkylène ou d'un oxyde d'alkylène avec un alcool polyhydroxylé comptant 2 à 6 radicaux hydroxyle. Il est possible d'utiliser tout alcool polyhydroxylé tels que ceux mentionnés ci-dessus pour la préparation des polyesters hydroxylés. Tout oxyde d'alkylène convenable peut être utilisé, comme il en est de l'oxyde d'éthylène, de l'oxyde de propylène, de l'oxyde de butylène, de l'oxyde d'amylène, outre des copolymères hétérogènes ou à blocs de ces oxydes. Les polyalkylènepolyétherpolyols peuvent être préparés à partir d'autres composés de départ tels que le tétrahydrofuranne et les copolymères d'oxydes d'alkylène sur le tétrahydrofuranne, les épihalohydrines, comme l'épichlorhydrine, et les oxydes d'aralkylène, comme l'oxyde de styrène. Les polyalkylènepolyétherpolyols peuvent comprendre des radicaux hydroxyle primaires ou secondaires et, de préférence, sont des polyéthers issus d'oxydes d'alkylène de 2 à 6 atomes de carbone tels que les polyoxyéthylèneglycols, les polyoxypropylèneglycols et les polyoxybutylèneglycols. Les polyalkylènes-polyétherpolyols peuvent être préparés par tout procédé connu, par exemple celui mentionné par Wurtz en 1859 et dans Encyclopedia of Chemical Technology, volume 7, pages 257 à 262, publiée chez Interscience Publishers inc. (1951) ou dans le brevet US 1 922 459. Les polyéthers préférés sont notamment les produits d'addition d'oxydes d'alkylène sur le triméthylolpropane, le glycérol, le pentaérythritol, le saccharose, le sorbitol, le propylèneglycol et le 2,2-(4,4'-hydroxyphényl)propane, outre leurs mélanges, ayant un poids équivalent de 100 à 5 000.

Des polythioéthers polyhydroxylés appropriés qui peuvent être condensés avec les oxydes d'alkylène sont notamment le produit de condensation du thiodiglycol ou le produit de réaction d'un alcool dihydroxylé, tel que l'un de ceux mentionnés ci-dessus pour la synthèse des polyesters hydroxylés, avec tout autre thioétherglycol approprié.

Le polyester hydroxylé peut aussi être un polyesteramide tel qu'obtenu par addition d'une certaine quantité d'amine ou d'amino-alcool aux réactifs servant à la préparation de ce polyester. Ainsi, des polyesteramides peuvent êtres obtenus par condensation d'un amino-alcool tel que l'éthanolamine avec les acides polycarboxyliques mentionnés ci-dessus, ou bien ils peuvent être préparés à l'aide des mêmes réactifs que ceux formant le polyester hydroxylé, une partie seulement des réactifs étant formée par un diamine telle que l'éthylènediamine.

Les composés phosphorés polyhydroxylés qui peuvent être utilisés sont notamment les composés mentionnés dans le brevet US 3 639 542. Les composés phosphorés polyhydroxylés préférés sont obtenus à partir d'oxydes d'alkylène et d'acides du phosphore ayant une équivalence en P₂O₅ d'environ 72 à 95 %.

Des polyacétals convenables qui peuvent être condensés avec des oxydes d'alkylène sont notamment les produits de la réaction du formaldéhyde ou d'un autre aldéhyde convenable avec un alcool dihydroxylé ou un oxyde d'alkylène tels que ceux mentionnés ci-dessus.

Des thiols aliphatiques appropriés qui peuvent être condensés avec des oxydes d'alkylène sont notamment les alcanethiols comprenant au moins deux radicaux thiol tels que le 1,2-éthanedithiol, le 1,2-propanedithiol, le 1,3-propanedithiol et le 1,6-hexanedithiol, outre les alkènethiols, comme le 2-butène-1,4-dithiol et les alkynethiols, comme le 3-hexyne-1,6-dithiol.

Des amines appropriées qui peuvent être condensées avec des oxydes d'alkylène sont notamment les amines aromatiques, comme l'aniline, l'o-chloroaniline, la p-aminoailine, le 1,5-diaminonaphtalène, la méthylènedianiline, les produits de condensation de l'aniline et du formaldéhyde et le 2,4-diaminotoluène, outre les amines aliphatiques, comme la méthylamine, la triisopropanolamine, l'éthylènediamine, la 1,3-propylènediamine, la 1,4-butylènediamine et la 1,3-butylènediamine.

Les polyols contenant des groupements esters peuvent également convenir. Ces polyols sont préparés par réaction d'un oxyde d'alkylène avec un anhydride d'acide dicarboxylique et un composé contenant des atomes d'hydrogène actifs. On peut se reporter aux brevets US 3 585 185, US 3 639 541 et US 3 639 542 pour une description détaillée de la méthode de préparation.

Les polyols insaturés pouvant être utilisés dans la présente invention peuvent être préparés par réaction de tout polyol classique, tel que ceux définis précédemment, avec un composé organique comprenant à la fois au moins une insaturation éthylénique et un radical hydroxyle, carboxyle, époxyde ou anhydride. En variante, les polyols peuvent être préparés à partir d'un composé comprenant à la fois au moins une insaturation éthylénique et un radical hydroxyle, carboxyle, anhydride ou époxyde comme réactif intervenant dans la synthèse du polyol. Des exemples de tels composés organiques sont les acides et anhydrides polycarboxyliques insaturés, comme l'acide ou l'anhydride maléique, l'acide ou l'anhydride fumarique, l'acide ou l'anhydride crotonique, l'anhydride propénylsuccinique et les acides ou anhydrides maléiques halogénés, les alcools polyhydroxylés insaturés, comme le 2-butène-1,4-diol, l'éther allylique du glycérol, l'éther allylique du triméthylolpropane, l'éther allylique du pentaérythritol, l'éther vinylique du pentaérythritol, l'éther diallylique du pentaérythritol et le 1-butène-3,4-diol, outre les époxydes insaturés, comme le 3,4-époxyde du 1-vinylcyclohexane, le monoxyde de butadiène, l'éther glycidylique de vinyle ou 1-vinyloxy-2,3-époxypropane, le méthacrylate de glycidyle et l'oxyde de 3-allyloxypropylène ou éther glycidylique d'allyle. Lorsqu'un acide ou anhydride polycarboxylique sert à incorporer une insaturation dans les polyols, il est nécessaire de faire réagir le polyol insaturé avec un oxyde d'alkylène, qui est de préférence l'oxyde d'éthylène ou de propylène, pour remplacer les radicaux carboxyle par des radicaux hydroxyle avant l'utilisation conformément à l'invention. La quantité d'oxyde d'alkylène utilisée est de nature à abaisser l'indice d'acide du polyol insaturé à environ 1 au maximum.

Pour la préparation de polyols insaturés utilisables dans le procédé suivant l'invention, la quantité de composé organique, rapportée à 1 mole de polyol, est d'environ 0,1 à 3,0 moles et de préférence de 0,30 à 1,5 moles.

La préparation de polyols insaturés utilisés suivant l'invention est effectuée suivant les procédés classiques, tels que ceux décrits dans les brevets US 3 275 606 et US 3 280 077. En règle générale, il est nécessaire que la température de réaction soit de 0 à 130°C. Les catalyseurs tant acides, comme les acides de Lewis, que basiques, comme les hydroxydes de métaux alcalins, peuvent convenir. De plus, une réaction sans catalyse peut être effectuée à une température de 50 à 200°C.

En outre, les polyols insaturés obtenus par la polymérisation radicalaire des diènes peuvent convenir. On peut citer notamment les polyols préparés en polymérisant le polybutadiène ou l'isoprène avec éventuellement un ou plusieurs monomère(s) éthyléniques insaturé(s) avec un amorceur radicalaire tel que par exemple le peroxyde d'hydrogène.

Le procédé de l'invention peut être effectué en présence d'un agent de transfert de chaîne, notamment les alkylmercaptans avec le radical alkyle ayant de 1 à 20 atomes de carbone. La quantité d'agent de transfert de chaîne mise en jeu est généralement comprise entre 0 et 2 % en poids du ou des monomère(s) éthylénique(s) insaturé(s) à polymériser.

Le procédé conforme à l'invention peut être mis en oeuvre en introduisant tous les réactifs dans un réacteur, lequel est ensuite porté à la température de polymérisation. Le procédé peut également être mis en oeuvre par apport simultané du ou des monomère(s) éthylénique(s) insaturé(s) et de l'ester d'acide azocarboxylique liquide au polyol à vitesse constante. Suivant un mode préféré du procédé, le réacteur contenant le polyol est d'abord mis sous azote, puis porté à la température de polymérisation et ensuite le ou les monomère(s) éthylénique(s) insaturé(s), éventuellement en mélange avec l'agent de transfert de chaîne, et l'ester d'acide azocarboxylique éventuellement en solution dans une fraction du polyol, sont introduits simultanément et à vitesse constante. Après la fin de l'introduction du ou des monomère(s), on porte le réacteur à la température de cuisson avec injection d'une fraction d'ester d'acide azocarboxylique afin de consommer les monomères résiduels. Pendant toute la durée des opérations le réacteur est sous balayage d'azote.

Suivant une variante du procédé, l'ester d'acide azocarboxylique peut être introduit en semi-continu tout au long de la polymérisation.

Outre l'avantage d'être liquide à une température comprise entre -20 et 27°C, les esters d'acides carboxyliques utilisés sont extrêmement solubles dans les polyols et autres milieux organiques. De plus, ils ne génèrent ni des sous produits toxiques, ni même des composés cyanés.

Les dispersions de copolymères ainsi obtenues sont stables, transparentes et aptes à être utilisées dans la fabrication des polyuréthanes.

### PARTIE EXPERIMENTALE

### Produits :

| | |
|---|---|
| DEAB : | Diéthyl 2,2'-azobisisobutyrate |
| Arcol 1 000 P : | Polyol de polyoxypropylène de Lyondell contenant 0,02 meq/g d'insaturation, d'indice d'OH 110 mg KOH/g |
| Arcol polyol 1025 : | polyol de polyoxypropylène de Lyondell contenant 50 meq/Kg d'insaturation, d'indice d'OH 28,5 mg KOH/g. |
| PolyBd R20LM: | Polybutadiène hydroxylé d'Elf Atochem d'indice d'OH 95mg KOH/g |
| Poly Bd R45HT : | polybutadiène hydroxylé d'Elf Atochem d'indice d'OH 47 mg KOH/g |

Dans ce qui suit, sauf indication contraire, les quantités sont exprimées en parties en poids.

### Exemple 1

Dans un réacteur équipé d'un thermomètre, d'une agitation, d'une source d'azote, on introduit 60 parties de Arcol 1 000 P. Le polyol est dégazé à l'azote pendant 30 minutes par bullage et est ensuite maintenu sous atmosphère d'azote tout au long de la réaction. Le contenu du réacteur est alors porté à 80°C. Un mélange constitué de 10 parties de styrène, 10 parties d'acrylonitrile et 0,04 partie de n-dodécylmercaptan est introduit dans le réacteur sur une durée de 3 heures parallèlement à une solution de 20 parties Arcol 1 000 P à laquelle est additionné 0,3 partie de DEAB. A la fin de la coulée des monomères, du polyol et de l'amorceur, on coule 0,04 partie de DEAB dans le réacteur, la température du milieu réactionnel est ensuite portée à 100°C et le milieu est maintenu à cette température pendant une heure. Le contenu du réacteur est alors refroidi et enfin vidangé.

La composition ainsi obtenue est une dispersion de viscosité Brookfield à 25°C de 1 080 mPa.s et d'indice d'OH : 85 mg KOH/g.

### Exemple 2

On opère comme décrit à l'exemple 1 sauf que l'Arcol 1 000 P est remplacé par la polyBd R20LM.

La composition ainsi obtenue est une dispersion homogène transparente de viscosité Brookfield à 25°C de 3 050 mPa.s et d'indice d'OH: 75 mg KOH/g.

### Exemple 3

Dans un réacteur équipé d'un thermomètre, d'une agitation, d'une source d'azote, on introduit 60 parties de polyBd R45HT. Le polyol est dégazé à l'azote pendant 30 minutes par bullage et est ensuite maintenu sous atmosphère d'azote tout au long de la réaction. Le contenu du réacteur est alors porté à 80°C. Un mélange constitué de 10 parties de styrène, 10 parties d'acrylonitrile et 0,04 partie de n-dodécylmercaptan est introduit dans le réacteur sur une durée de 3 heures parallèlement à une solution de 20 parties PolyBd R20LM à laquelle est additionné 0,4 partie de DEAB. A la fin de la coulée des monomères, du polyol et de l'amorceur, on coule 0,08 partie de DEAB dans le réacteur, la température du milieu réactionnel est augmentée à 100°C et le milieu est maintenu à cette température pendant une heure. Le contenu du réacteur est alors refroidi et vidangé.

La composition ainsi obtenue est une dispersion homogène transparente de viscosité Brookfield à 25°C de 8 000 mPa.s et d'indice d'OH: 46 mg KOH/g.

### Exemple 4

On opère comme décrit à l'exemple 2 sauf qu'un mélange constitué de 20 parties de méthacrylate de butyle et 0,04 partie de n-dodécyl mercaptan est introduit dans le réacteur sur une durée de 3 heures parallèlement à une solution de 20 parties de PolyBd R20LM auquel est additionné 0,4 partie de DEAB.

La composition ainsi obtenue est une dispersion homogène transparente de viscosité Bookfield à 25°C de 7 300 mPa.s et d'indice d'OH = 75 mg KOH/g.

### Exemple 5

On opère comme décrit à l'exemple 1 sauf que l'Arcol 1 000 P est remplacé par l'Arcol polyol 1 025 et que le mélange constitué de 6 parties de styrène et 14 parties d'acrylonitrile est introduit dans le réacteur sur une durée de trois heures parallèlement à une solution de 20 parties Arcol polyol 1 025 auquel est additionné 0,4 partie de DEAB.

La composition ainsi obtenue est une dispersion stable de viscosité Brookfield à 25°C de 3 850 mPa.s et d'indice d'OH = 23 mg KOH/g

## Revendications

1. Procédé de préparation de dispersions stables de (co)polymères dans un polyol par polymérisation in situ d'un monomère ou d'un mélange de monomères éthylénique(s) insaturé(s) en présence d'un amorceur **caractérisé en ce que** l'amorceur est un ester d'acide azocarboxylique de formule (II) ou un mélange d'ester d'acides azocarboxyliques de formule (II). 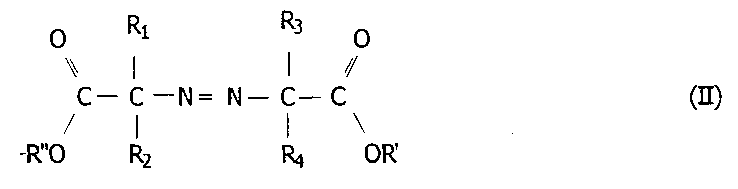 R₁, R₂, R₃ et R₄, identiques ou différents sont sélectionnés indépendamment dans le groupe consistant en -alkyles linéaires ou ramifiés ayant de 1 à 9 atomes de carbone, de préférence de 1 à 4 atomes de carbone, éventuellement substitués par un ou plusieurs substituants sélectionnés parmi les substituants hydroxyl, alkoxy en C₁ à C₆, halogène ; - cycloalkyles en C₃ à C₁₂, éventuellement substitués par un ou plusieurs substituants sélectionnés parmi les groupes alkyle en C₁ à C₆, alkoxy en C₁ à C₆, hydroxy et halogéné ;
- aralkyles éventuellement substitués par un ou plusieurs groupes allyle an C₁ à C₆, alkoxy en C₁ à C₆, hydroxy et halogéné ;
- aryles éventuellement substitués par un ou plusieurs substituants sélectionnés parmi ies groupes alkyle en C₁ à C₆, alkoxy en C₁ à C₆, hydroxy et halogéné ;
avec au moins une des combinaisons R₁-R₂ et R₃-R₄ pouvant éventuellement former un cycle aliphatique ; R" et R' sont identiques ou différents l'un de l'autre et sont sélectionnés indépendamment dans le groupe consistant en radicaux aliphatiques linéaires ou ramifiés en C₁ à C₁₀, de préférence en C₁ à C₄.

2. Procédé selon la revendication 1 **caractérisé en ce que** les esters d'acides azocarboxyliques sont ceux dans lesquels R" et R' représentent le méthyle ou l'éthyle et dans lesquels R₁, R₂, R₃ et R₄ représentent un radical alkyle C₁ à C₄.

3. Procédé selon la revendication 2 **caractérisé en ce que** R" et R' représentent le radical éthyle et R₁, R₂, R₃ et R₄ représentent un radical méthyle.

4. Procédé selon la revendication 1 **caractérisé en ce que** l'amorceur est un mélange de diéthyl 2,2'-azobisisobutyrate (DEAB) et de méthyl 2, 2'-azobisisobutyrate (DMAB).

5. Procédé selon l'une quelconque des revendications 1 à 4 **caractérisé en ce que** les monomères éthyléniques insaturés sont des monomères ou des mélanges de monomères miscibles dans le polyol.

6. Procédé selon la revendication 1 **caractérisé en ce que** l'amorceur est un mélange de DEAB, DMAB et de méthyl 2, éthyl 2' azobisisobutyrate.

7. Procédé selon l'une quelconque des revendications 1 à 6 **caractérisé en ce que** l'amorceur est introduit en semi-continu.

## Claims

1. Process for preparing stable dispersions of (co)polymers in a polyol by in situ polymerization of an ethylenically unsaturated monomer or mixture of monomers in the presence of an initiator, **characterized in that** the initiator is an azocarboxylic acid ester of formula (II) or a mixture of azocarboxylic acid esters of formula (II) 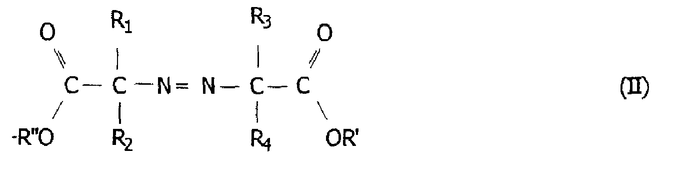 R₁, R₂, R₃ and R₄, which may be identical or different, are independently selected from the group consisting of
- linear or branched alkyls containing from 1 to 9 carbon atoms and preferably from 1 to 4 carbon atoms, optionally substituted with one or more substituents selected from hydroxyl, C₁ to C₆ alkoxy and halogen substituents;
- C₃ to C₁₂ cycloalkyls, optionally substituted with one or more substituents selected from C₁ to C₆ alkyl, C₁ to C₆ alkoxy, hydroxyl and halo groups;
- aralkyls optionally substituted with one or more C₁ to C₆ alkyl, C₁ to C₆ alkoxy, hydroxyl and halo groups;
- aryls optionally substituted with one or more substituents selected from C₁ to C₆ alkyl, C₁ to C₆ alkoxy, hydroxyl and halo groups;
with at least one of the combinations R₁-R₂ and R₃-R₄ possibly forming an aliphatic ring; R" and R' are identical or different and are independently selected from the group consisting of linear or branched C₁ to C₁₀ and preferably C₁ to C₄ aliphatic radicals.

2. Process according to Claim 1, **characterized in that** the azocarboxylic acid esters are those in which R" and R' represent methyl or ethyl and in which R₁, R₂, R₃ and R₄ represent a C₁ to C₄ alkyl radical.

3. Process according to Claim 2, **characterized in that** R" and R' represent an ethyl radical and R₁, R₂, R₃ and R₄ represent a methyl radical.

4. Process according to Claim 1, **characterized in that** the initiator is a mixture of diethyl 2,2'-azobisisobutyrate (DEAB) and 2-methyl 2'-azobisisobutyrate (DMAB).

5. Process according to any one of Claims 1 to 4, **characterized in that** the ethylenically unsaturated monomers are monomers or mixtures of monomers that are miscible in the polyol.

6. Process according to Claim 1, **characterized in that** the initiator is a mixture of DEAB, DMAB and 2-methyl ethyl 2'-azobisisobutyrate.

7. Process according to any one of Claims 1 to 6, **characterized in that** the initiator is introduced semi-continuously.

## Patentansprüche

1. Verfahren zur Herstellung von stabilen Dispersionen von (Co)polymeren in einem Polyol durch in-situ-Polymerisation eines ethylenisch ungesättigten Monomers oder einer Mischung ethylenisch ungesättigter Monomere in Gegenwart eines Initiators, **dadurch gekennzeichnet, daß** es sich bei dem Initiator um einen Azocarbonsäureester der Formel (II) oder eine Mischung von Azocarbonsäureestern der Formel (II) 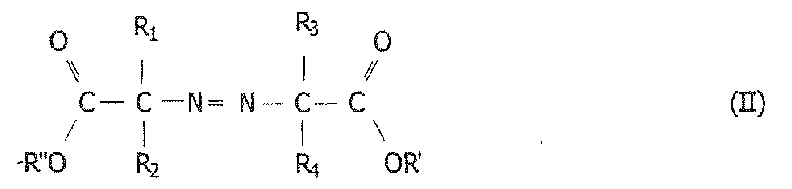 wobei R₁, R₂, R₃ und R₄ gleich oder verschieden sind und unabhängig voneinander aus der Gruppe bestehend aus
- linearen oder verzweigten Alkylgruppen mit 1 bis 9 Kohlenstoffatomen, vorzugsweise 1 bis 4 Kohlenstoffatomen, die gegebenenfalls durch einen oder mehrere unter Hydroxyl-, C₁- bis C₆-Alkoxy- und Halogensubstituenten ausgewählte Substituenten substituiert sind;
- C₃- bis C₁₂-Cyclkoalkylgruppen, die gegebenenfalls durch einen oder mehrere unter C₁- bis C₆-Alkyl-, C₁- bis C₆-Alkoxy-, Hydroxy- und Halogengruppen ausgewählte Substituenten substituiert sind;
- Aralkylgruppen, die gegebenenfalls durch eine oder mehrere C₁- bis C₆-Alkyl-, C₁- bis C₆-Alkoxy-, Hydroxy- und Halogengruppen ausgewählte Substituenten substituiert sind;
- Arylgruppen, die gegebenenfalls durch eine oder mehrere C₁- bis C₆-Alkyl-, C₁- bis C₆-Alkoxy-, Hydroxy- und Halogengruppen ausgewählte Substituenten substituiert sind; wobei mindestens eine der Kombinationen R₁-R₂ und R₃-R₄ gegebenenfalls einen aliphatischen Ring bildet;
R" und R' gleich oder voneinander verschieden sind und unabhängig voneinander aus der Gruppe bestehend aus linearen oder verzweigten aliphatischen C₁- bis C₁₀- und vorzugsweise C₁- bis C₄-Resten ausgewählt sind;
handelt.

2. Verfahren nach Anspruch 1, **dadurch gekennzeichnet, daß** es sich bei den Azocarbonsäureestern um diejenigen handelt, in denen R" und R' für Methyl oder Ethyl stehen und R₁, R₂, R₃ und R₄ für einen C₁- bis C₄-Alkylrest stehen.

3. Verfahren nach Anspruch 2, **dadurch gekennzeichnet, daß** R" und R' für einen Ethylrest stehen und R₁, R₂, R₃ und R₄ für einen Methylrest stehen.

4. Verfahren nach Anspruch 1, **dadurch gekennzeichnet, daß** es sich bei dem Initiator um eine Mischung von 2,2'-Diethylazobisisobutyrat (DEAB) und 2,2'-Methylazobisisobutyrat (DMAB) handelt.

5. Verfahren nach einem der Ansprüche 1 bis 4, **dadurch gekennzeichnet, daß** es sich bei den ethylenisch ungesättigten Monomeren um Monomere oder Mischungen von Monomeren handelt, die in dem Polyol löslich sind.

6. Verfahren nach Anspruch 1, **dadurch gekennzeichnet, daß** es sich bei dem Initiator um eine Mischung von DEAB, DMAB und 2-Methyl-2'-ethylazobisisobutyrat handelt.

7. Verfahren nach einem der Ansprüche 1 bis 6, **dadurch gekennzeichnet, daß** man den Initiator halbkontinuierlich einträgt.
